(19) **Europäisches Patentamt / European Patent Office / Office européen des brevets**

(11) **EP 3 563 150 B1**

(12) **EUROPEAN PATENT SPECIFICATION**

(45) Date of publication and mention
of the grant of the patent:
**03.12.2025 Bulletin 2025/49**

(21) Application number: **17838130.7**

(22) Date of filing: **22.12.2017**

(51) International Patent Classification (IPC):
**G01N 30/86** *(2006.01)*    **B01D 15/18** *(2006.01)*
**G01N 30/44** *(2006.01)*    **G01N 30/46** *(2006.01)*

(52) Cooperative Patent Classification (CPC):
**G01N 30/8658;** B01D 15/1821; G01N 30/468

(86) International application number:
**PCT/EP2017/084478**

(87) International publication number:
**WO 2018/122191 (05.07.2018 Gazette 2018/27)**

(54) **MONITORING PERFORMANCE IN CONTINUOUS CHROMATOGRAPHY**

**LEISTUNGSÜBERWACHUNG IN KONTINUIERLICHER CHROMATOGRAPHIE**

**SURVEILLANCE DE PERFORMANCE EN CHROMATOGRAPHIE CONTINUE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2016 GB 201622342**

(43) Date of publication of application:
**06.11.2019 Bulletin 2019/45**

(73) Proprietor: **Cytiva Sweden AB**
**751 84 Uppsala (SE)**

(72) Inventors:
- **HYCKENBERG, Key**
  **751 84 Uppsala (SE)**
- **BERG, Mikael, Johan Helmer Eugen**
  **751 84 Uppsala (SE)**
- **SKOGLAR, Helena**
  **751 84 Uppsala (SE)**
- **MALMQUIST, Gunnar**
  **751 84 Uppsala (SE)**

- **CARLSTEN, Mikael**
  **751 84 Uppsala (SE)**
- **LUNDQVIST, Roger**
  **751 84 Uppsala (SE)**
- **ANDERSSON, Dan**
  **751 84 Uppsala (SE)**
- **MATHIASSON, Linda**
  **751 84 Uppsala (SE)**
- **MATTSSON, Lars Henning Ivar**
  **751 84 Uppsala (SE)**
- **SENDABO, Sara**
  **751 84 Uppsala (SE)**

(74) Representative: **Wu, Ping**
**Cytiva**
**Björkgatan 30**
**751 84 Uppsala (SE)**

(56) References cited:
WO-A1-2010/019814    WO-A1-2010/151214
WO-A1-2010/151214    US-A1- 2014 033 793

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a method in a continuous chromatography system configured to operate with at least three columns adapted for cyclic use for continuous purification of a sample comprising a target product when feeding the continuous chromatography system with the sample.

BACKGROUND

An important factor in process chromatography is binding capacity of a chromatography column for the solute. The binding capacity directly influences the productivity and cost of the chromatography step. The binding capacity is defined either in terms of dynamic/breakthrough capacity or as the maximum binding capacity. The dynamic capacity depends on the conditions at which the solution flows through a column packed with chromatography medium, and may be represented as a ratio between column volume and feed flow rate, a so called residence time. The maximum binding capacity represents a breakthrough capacity of the column if the residence time was infinitely long.

An initial breakthrough capacity is defined as the amount of binding solutes taken up by a column at the point when the solutes are first detected in the effluent. The breakthrough capacity can also be defined as a capacity at a given percentage of breakthrough, where the percentage represents the amount of binding solute present in the effluent from the column, expressed in percent of the solute present in the feed. According to this definition the maximum binding capacity will be equal to breakthrough capacity at 100% of breakthrough, i.e., at the point where no more solute can bind to the column. Therefore, in order to determine maximum capacity, the breakthrough capacities are measured at different levels of breakthrough, where the levels are defined by levels of concentration of solutes measured in the effluent from the column during sample loading.

Often these concentrations are determined by continuously monitoring a signal in a flow through a detector placed in the effluent line. The plot of these concentrations (signal) against time (or volume or mass loaded) is called a breakthrough curve. Location of the breakthrough on a chromatogram and its shape is related to how much solute the column is capable of binding and how quickly all adsorption sites are saturated with the solute. It also shows how much more solute can be bound to the column at any given time.

Breakthrough binding capacity for the solute is, in the presence of the impurities, one of the most critical parameters to optimize when developing a purification protocol. Because impurities often have similar light adsorbing properties as the solute determination of binding breakthrough capacities is a tedious and laborious work. In a typical experiment effluent from the column is collected in series of fraction, which are subsequently analysed using high resolution analysis techniques for the product in question, such HPLC, biological assays, ELISA, mass spectrometry, etc. Thus the determination of binding capacities for a chromatography column is rather complicated and in cases where the feed solution concentration is randomly varying during the feed application onto a chromatography column the true breakthrough capacities are close to impossible to measure accurately.

Accurate measuring is important if one wants to operate a column at the optimum process conditions. For instance, it can be shown that under certain conditions a maximum productivity of a capture chromatography step is obtained when the solute of interest reaches a certain value of its concentration in the column effluent, for instance a 10% of its initial concentration. If the breakthrough capacity is determined according to the method described above, it is impossible to terminate loading of the column at exact 10% breakthrough if either feed concentration or process conditions, including flow rate and/or chromatography media properties, vary with time in unpredictable manner.

Furthermore, accurate determination of breakthrough capacities at different levels of breakthrough under varying process conditions is also important in the case of continuous chromatography. Continuous chromatography can be realised by a system operating using simulated moving bed technology, wherein the connections between the columns is changed to facilitate a continuous feed of sample into the system. However, continuous chromatography may also be realised using moving bed technologies, wherein the columns are moved to facilitate continuous feed of sample.

In continuous chromatography, several identical, or almost identical, columns are connected in an arrangement that allows columns to be operated in series and/or in parallel, depending on the method requirements. Thus, all columns can be run in principle simultaneously, but with slightly shifted method steps. The procedure can be repeated, so that each column is loaded, eluted, and regenerated several times in the process. Compared to 'conventional' chromatography, wherein a single chromatography cycle is based on several consecutive steps, such as: load the sample, wash, elution, strip, Clean-In-Place (CIP) and re-equilibration, before the column may be used for another batch, in continuous chromatography based on multiple identical columns all these steps occur simultaneously but on different columns each.

Continuous chromatography operation results in better utilization of chromatography resin, reduced processing time and reduced buffer requirements, all of which benefits process economy.

Continuous chromatography is an example of periodic counter current process, because periodically all the chromatography columns comprising the system are simultaneously moved in the direction opposite to the sample flow. The apparent movement of the columns is realized by appropriate redirections of inlet and outlet stream to/from the columns.

Historically, essential factors for a reliable continuous process are:

1) the quality of the columns used, and more specifically the similarity or even identity between columns,
2) constant feed composition, and
3) hardware reliance, for instance constant flow rate delivered by pumps, valve functionality, etc.

If the columns are not identical, the theoretical calculations typically used to design continuous chromatography process will not be correct, and it will become difficult to design an efficient and robust continuous chromatography process. The same argument applies if feed concentration and flow rates vary with time in an unexpected manner.

Therefore, for scale-up considerations, having identical columns, reliable pumps in the system is essential. However, the packing of a column with a chromatography media is very complex in order to obtain repeatable results. Even small differences in the number of plates or other packing properties can have a huge effect on the end result. Furthermore, since capacities of chromatography resins typically change during resins lifetime/usage the process conditions chosen for a fresh resin may not be applicable for a resin that has been used for several times. If also the feed solution concentration will vary it will be even more complicated to design an efficient continuous chromatography process that would operate at its optimum all the time.

An example of continuous chromatography, configured to operate with three or four columns, is ÄKTA™pcc 75 produced by GE Health Care (description available from www.gelifesciences.com/AKTA).

The process performance of the ÄKTA™pcc 75 is monitored through trend curves for UV, amount of target molecules in elution peaks, and sample volume loaded on each column per cycle.

However, the large amount of data generated by the continuous chromatography system makes it difficult to detect deviating behaviour of the system performance in real time.

Thus, there is a need to introduce a process for handling large amount of data to identify deviating behaviour in the overall system performance in real time.

WO 2010/151214 A1 discloses a continuous chromatography system using three columns wherein real time trend analysis of the binding capacities of the columns is performed based on measured UV absorbance values in the common feed and individual effluent lines.

SUMMARY

An object of the present disclosure is to provide methods and devices configured to execute methods and computer programs which seek to mitigate, alleviate, or eliminate one or more of the above-identified deficiencies in the art and disadvantages singly or in any combination.

The object is achieved by a method for monitoring operational status in a continuous chromatography system according to claim 1.

An advantage is that the efficiency of the purification process in an continuous chromatography is increased.

Another advantage is that it is possible to plan and perform maintenance of the continuous chromatography in advance, and thereby minimizing the down-time of the system.

Further objects and advantages may be obtained from the detailed description by a skilled person in the art.

BRIEF DESCRIPTION OF THE DRAWINGS

Fig. 1 illustrates an overview of a bioprocess purification system designed to purify a target product using continuous chromatography.

Fig. 2 illustrates a continuous chromatography with an arbitrary number of columns, based on a simulated moving bed technology.

Figs. 3a-3c illustrate the principle of three column chromatography.

Figs. 4a-4d illustrate capacity utilization for conventional batch chromatography operation compared to multi-column chromatography operation.

Fig. 5 illustrates an overview of two-step breakthrough in continuous chromatography.

Fig. 6 illustrates UV signal detectors used for dynamic control in continuous chromatography.

Figs. 7a and 7b illustrate data used for trend analysis.

Fig. 8 illustrates a process for improving the efficiency in an continuous chromatography.

Fig. 9 illustrates a graphical interface for a continuous chromatography in a first occasion.
Figs. 10a-10d illustrate graphs for monitoring operational status of columns in a continuous chromatography.
Fig. 11 illustrates a graphical interface for a continuous chromatography in a second occasion.
Fig. 12 illustrates a real time evaluation interface.

DETAILED DESCRIPTION

A continuous chromatography is designed for purification of target products (such as proteins, biomolecules from cell culture/fermentation, natural extracts) in continuous downstream processes using periodic counter current chromatography, as explained in background section. The technology employs three or four chromatography columns to create a continuous purification step. The columns are switched between loading and non-loading steps, such as wash and elution. Continuous chromatography supports process intensification by reducing footprint and improving productivity. In addition, continuous chromatography is especially suited for purification of unstable molecules, as the short process time helps to ensure stability of the target product.

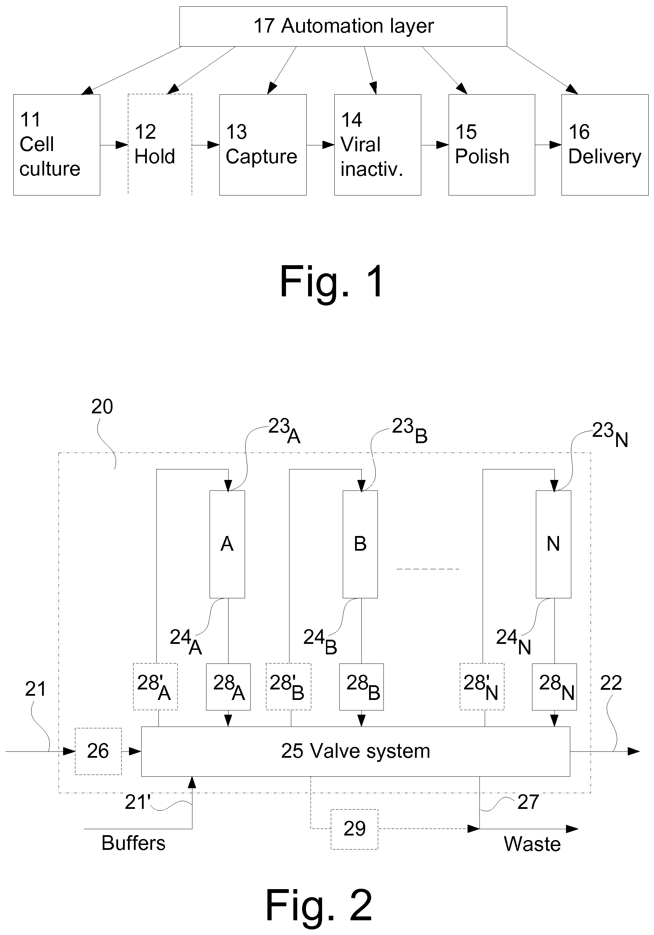

In figure 1, an overview of a bioprocess purification system, configured to purify a target product using a separation process is shown. The bioprocess purification system comprises a number of steps related to Cell culture 11, Hold 12, Capture 13, Viral inactivation 14, Polish 15 and Delivery 16.

In a fully continuous process the cell culture step 11 may be a perfusion type culture which comprises continuous addition of nutrients for cell growth in perfusion culture and continuous removal of product and waste through drain and filtration. E.g. using an Alternate Tangential Filtration( ATF) filter. The step may comprise process control for viable cell density (VCD), and the next step in the process starts when VCD reaches a pre-determined value. The VDC may be controlled by adapting the components of the cell culture media fed to the culture or by addition of certain components directly to the culture. Alternatively, the cell culture is of batch type.

The sample containing the target product is exploited in a cell free extraction process, e.g. by filtration, centrifugation or another technique.

The hold step 12 is an optional step depending on process needs, e.g. if a filter is in-line before capture step 13. The step may comprise process control on weight, and the next step in the process starts when a pre-determined volume value is reached, or alternatively after a certain time period or when a pre-determined mass is reached. The hold step may be used both for collecting a volume of filtered feed from a perfusion cell culture or from a batch culture.

The capture step 13 comprises a continuous chromatography that may have a filter in-line before the capture step. The continuous chromatography may be run as periodic counter current chromatography with a continuous feed of sample from the cell culture step 11, directly or via the hold step 12, containing the target product. The capture step comprises multiple batch elutions, and process control using in-line UV-sensors handles variation in feed concentration and resin capacity. The next step starts when a pre-determined amount value (e.g. volume, mass or time) is reached.

In the viral inactivation step 14, different options for virus inactivation is available depending on process needs. One option is to use batch mode with low pH for 30-60 minutes in hold up tank. The step may comprise process control on volume, time, temperature and pH. The next step starts when a pre-determined time is reached.

The polish step 15 may be straight through processing (STP) with a connected batch step or continuous chromatography with a continuous load step, or a combination thereof. The flow rate is adjusted to perfusion rate required by producer cells, which means that the flow rate is determined by the preceding step. The step may comprise process control for UV, flow and volume, and the next step starts when a pre-determined volume and amount is reached, alternatively when a timeout is reached.

The delivery step 16 may comprise a virus removal step, e.g. a viral filter, before an ultrafiltration step. The delivery step may be used as concentration step for batch addition of sample from polish step. The delivery step may comprise continuous or batch delivery of product and may comprise continuous or batch removal of waste. The step may comprise process control for pH, conductivity, absorbance, volume and pressure, and delivery is achieved when a pre-determined product concentration in a pre-defined environment is reached.

An automation layer 17 is used for handling decision points for next step in the process. Different type of sensors (not shown), both in-line sensors and off-line sensors, are integrated into the process flow to monitor different parameters that may be used for providing the automation layer 17 with data that could be used to handle the decision points. Sensors include but are not limited to only measure flow, VCD, weight, pressure, UV, volume, pH, conductivity, absorbance, etc.

It should be noted that UV an example of a parameter that could be monitored to detect the composition of the sample being purified. However, other parameters may be used operating in other frequency ranges, such as IR, fluorescence, x-rays, etc.

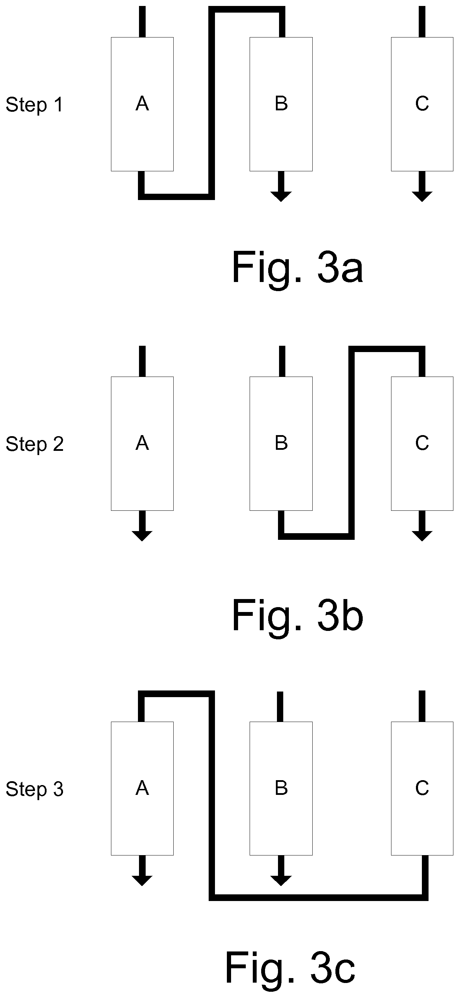

The capture step 13 may comprise a continuous chromatography 20, as illustrated in figure 2. Sample containing the target product is fed into the continuous chromatography 20 via inlet 21 and the eluted target product is available at outlet 22. The continuous chromatography 20 comprises multiple columns A, B,...,N, and each column is provided with a column inlet 23 and column outlet 24. The column inlet 23 and column outlet 24 of each column is connected to a valve system 25 configured to connect the columns cyclically to the inlet 21 and the outlet 22 to achieve continuous purification of the target product. Example of a system configuration having three columns is described in connection with figure 3a-3c.

The continuous chromatography 20 is further provided with buffer inlet 26 and waste outlet 27 in order to be able to perform the required operations. An in-line sensor 28 may provide after the column outlet 24 of each column or be assigned to the process flow and integrated into the valve system 25. Important parameters, such as UV, is measured to control the process, as described below. Another in-line sensor 28' may be provided before the column inlet 23 of each column in order to be able to directly evaluate performance of each column. An in-line inlet sensor 26 may also be provided to monitor the composition of the sample fed into the continuous chromatography 20

The continuous chromatography may also comprise off-line sensors 29, which are designed to extract material from the process and thereafter evaluate selected parameters before the material is disposed of as waste.

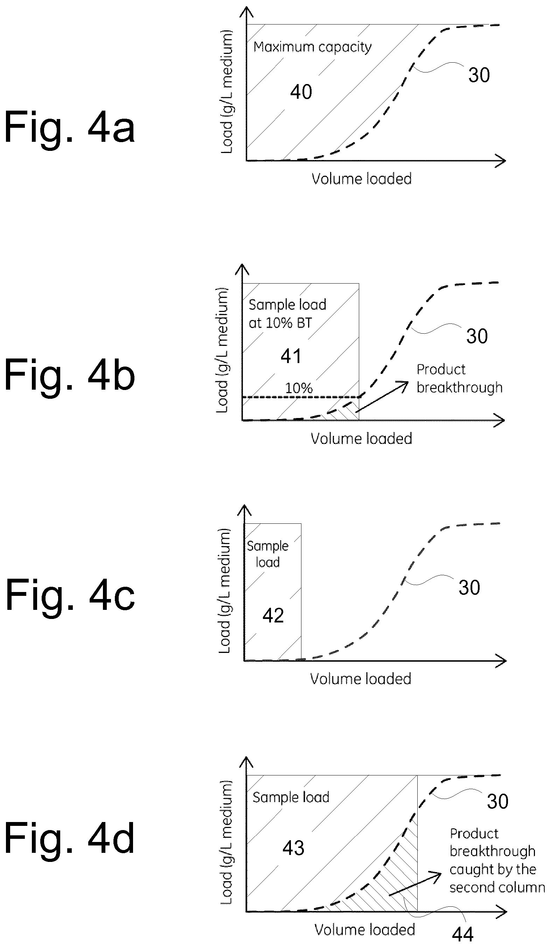

The principle behind the continuous chromatography is to keep at least two columns in the loading zone which allows for overloading of the first column without risk of product loss, as the breakthrough will be caught by downstream columns, as described in connection with figures 4a-4d.

The continuous chromatography comprises at least three columns and the principle of operations in a three columns (3C) setup is described in connection with figures 3a-3c. The 3C setup features two parallel flows: one for loading of the two columns in the loading zone, and one for the non-loading steps, e.g. elution and regeneration of the third column.

In figure 3a, illustrating step 1, column A and B are in the loading zone. Column A can be overloaded without sample loss, as column B catches the breakthrough from column A. In this way, the utilization of the resin binding capacity is maximized.

In figure 3b, illustrating step 2, the overloaded column A is switched and column B becomes the first column and column C becomes the second column in the loading zone. The overloaded column A will now be subjected to the non-loading steps, such as elution and regeneration in a parallel workflow.

In figure 3c, illustrating step 3, the overloaded column B in the loading zone is switched. Now column C becomes the first column and column A the second column in the loading zone, while column B is subjected to elution and regeneration in the parallel workflow. These three steps are repeated in a cyclic manner until required target product volume, mass or amount is reached (or until resin lifetime is reached and columns needs to be repacked or exchanged).

The continuous chromatography illustrated in figure 2 may utilize more than three columns, and in a four column (4C) setup, the same principle applies. However, the non-loading steps can become limiting in a 3C setup, and the non-loading steps can be split on two columns and run in parallel utilizing a third flow path in the 4C setup. The 4C setup allows for balancing the loading and non-loading steps. More columns will lead to a more flexible system, while the complexity of the valve system 25 becomes increasingly complicated. However, some continuous chromatography have sixteen or more columns.

Figures 4a-4b illustrate capacity utilization for conventional batch chromatography operation compared to multi-column chromatography operation. Figure 4a illustrates the total available capacity 40 of a chromatography resin and breakthrough curve is indicated by 30. As is apparent from the graph, when a small volume is loaded the product will be captured in the resin, but at large volumes a substantial part of the product will breakthrough and be wasted in a batch operation.

Figure 4b illustrates the sample load 41 at 10% breakthrough. The product below the breakthrough curve 30 will be wasted if not reused in another column. The capacity 42 typically used in batch operations is illustrated in Figure 4c, and capacity 43 used in continuous chromatography is illustrated in figure 4d. Note that the product breakthrough 44 is captured by the columns downstream in the loading zone.

Dynamic control functionality, which allows for some variations in feed composition, may be implemented in the continuous chromatography. The principle of dynamic control is based on the relative difference in UV signals before and after each column at breakthrough. The difference between the baseline UV and the UV signal at 100% breakthrough for a saturated column is defined as $\Delta UV_{max}$, wherein $\Delta UV$ is calculated using equation (1)

$$\Delta UV = 100 \times \frac{UV_{BT} - Baseline}{UV_{sample} - Baseline} \qquad (1)$$

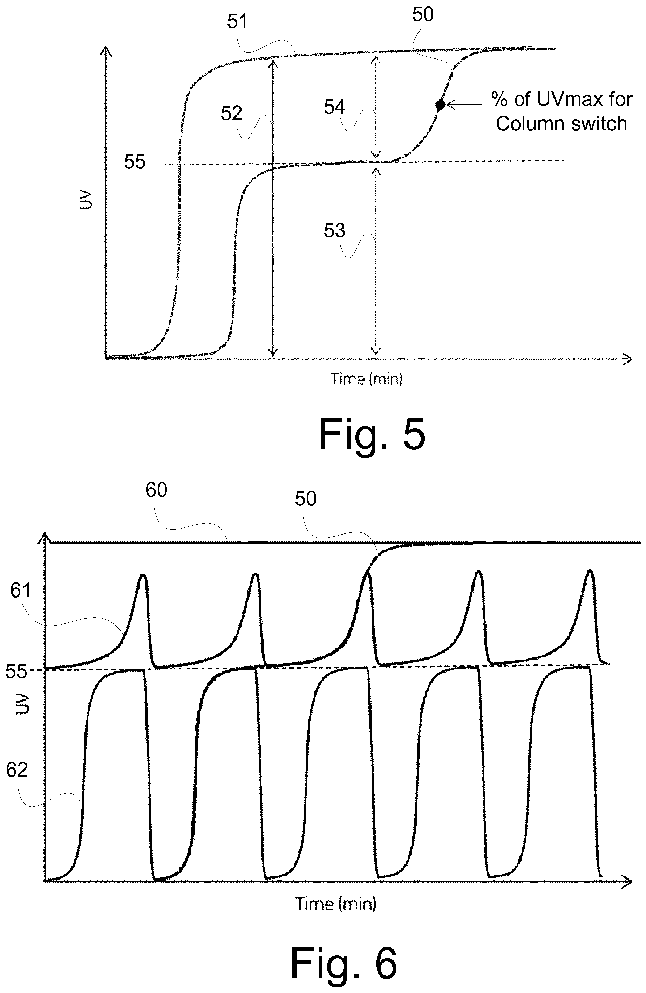

Figure 5 illustrates the two-step breakthrough, displaying the central UV signals used for dynamic control. Curve 50 shows the $UV_{BT}$ (i.e. the post column breakthrough curve), curve 51 shows the $UV_{sample}$ (i.e. the pre column feed line), and reference numeral 55 indicates the baseline. Reference numeral 52 indicates total signal from target product and impurities in the sample being fed into the column, reference numeral 53 indicates signal from impurities (background), and reference numeral 54 indicates $\Delta UV_{max}$ (signal from target product).

The difference between the baseline UV 55 and the UV signal at 100% breakthrough for a fully loaded column is defined as $\Delta UV_{max}$, where the desired level is process-dependent. A continuous chromatography may use UV detectors assigned to the process stream and not to the separate columns. Hence, each breakthrough curve may be generated based on signals from two UV detectors as illustrated in figure 6.

The breakthrough curve (dashed curve 50) and the baseline 55 are the same as shown in figure 5. Curve 60 is UV of the sample fed into the column, curve 61 is UV of the breakthrough after the column and curve 62 is UV of the flow through (waste).

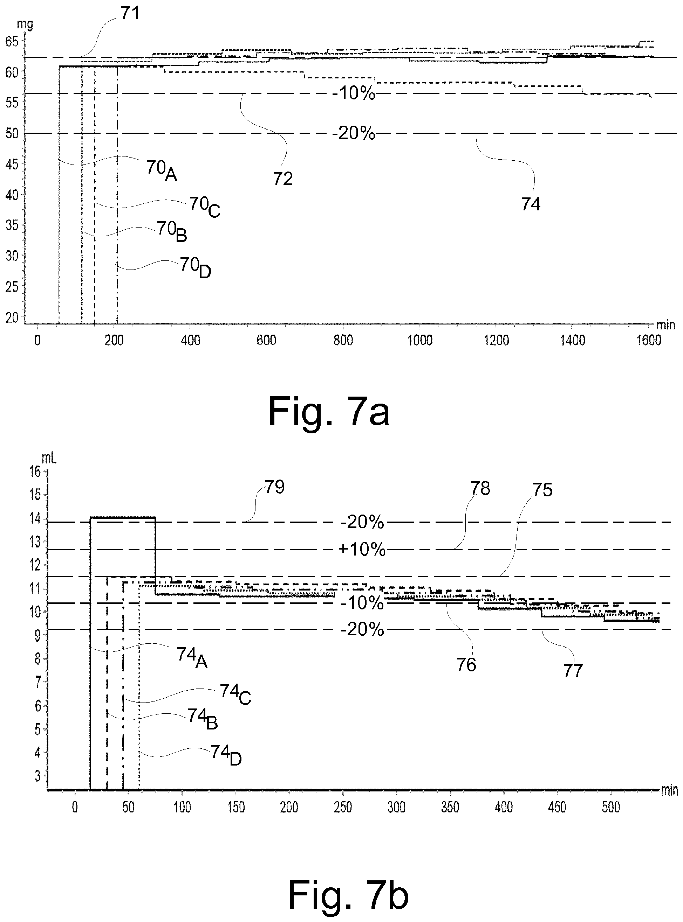

Figure 7a is a graph illustrating peak amount calculated after the elution step for each column. The calculation is an integration of the measured amount after elution and is measured in mg of the target product (y axis) and the x axis is run time.

The solid line $70_A$ indicates the peak amount calculated for column A, and the curve is amount is adjusted in steps approximately every 175 minutes. The same applies for column B (dashed line $70_B$), column C (wide dashed line $70_C$) and column D (dot-dashed line $70_D$).

The real time trend analysis may be based on a relative comparison between columns and/or an absolute comparison between cycles for each column.

Example

In figure 7a, the peak amount for columns A, B and D indicate a similar performance regarding the expected yield from the columns (around 62 mg per cycle). However, the peak amount for column C starts at the expected level (as indicated by 71) but after eight cycles, the peak amount is only 90% of the expected level (as indicated by 72), and thus a warning is issued within the system indicating that action is required and maintenance is scheduled to eliminate (or reduce) the effect column C has to the overall efficiency of the continuous chromatography.

If the peak amount for column C goes below the 80% of the expected level (as indicated by 73), immediate action may be needed to ensure full functionality.

Figure 7b is a graph illustrating loading volume of sample (y axis) into each column A-D over run time (x axis). The solid line $74_A$ is the measured loading volume for column A, and the curve is amount is adjusted in steps approximately every 60 minutes. The same applies for column B (dashed line $74_B$), column C (double dot-dashed line $74_C$) and column D (dotted line $74_D$).

Different boundary conditions (lines 75-79) are indicated in the graph, which may be used to identify trends that indicate a deviating behaviour. If, for instance, the loading volume is more than 20% higher than the expected level (as indicated by 75) immediate action is required to maintain proper functionality in the system. This is illustrated for column A, which exceeds the +20% level (as indicated by 79) after the first cycle. This may be an indication that the concentration of target product in the sample fed into the column is too low. However, this is only shown for column A during the first cycle and may be a result of the start-up process.

Apart from the first cycle for column A, all curves $74_A$-$74_D$ show the same behaviour, which is a steady declining behaviour and after 7-8 cycles, the lower warning level (as indicated by 76) is passed and this indicate that the concentration of target product in the sample is increasing. Action may be needed to ensure proper functionality.

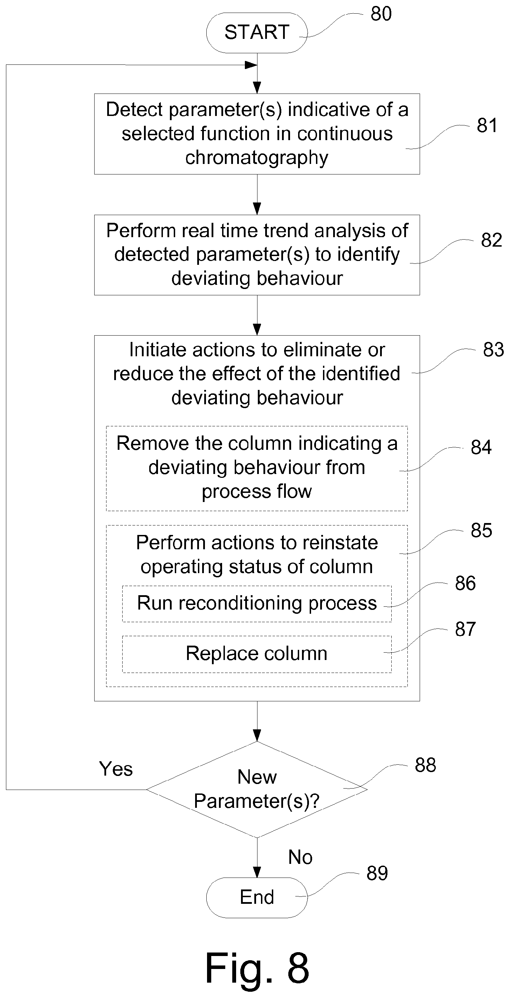

Figure 8 illustrates a method for monitoring operational status in continuous chromatography. The continuous chromatography is configured to operate with at least three columns adapted for cyclic use for continuous purification of a target product when feeding the continuous chromatography with a sample containing the target product.

The flow starts in step 80 and proceeds to step 81, wherein at least one parameter indicative of a selected function in the continuous chromatography is detected. Examples of parameters that may be detected (either by themselves or in combination) are UV, flow, pressure, pH, etc. The purpose of detecting one or more parameters are because they are linked to different functions. In one embodiment, the selected function in the continuous chromatography is indicative of operational status of at least one column.

In another embodiment, the selected function in the continuous chromatography is column capacity, and parameter(s) is/are detected for each column in the continuous chromatography. According to one aspect, the detected parameter is load volume of sample for each column to a predetermined capacity.

According to another aspect, the detected parameter in step 81 is target product concentration in sample introduced in each column of the continuous chromatography.

The flow continues to step 82, wherein real time trend analysis of the detected parameter is performed to identify a deviating behaviour of the selected function. Real time trend analysis may be performed over time (for instance when load volume is detected), or based on cycle number when multiple cycles for each of the at least three columns are performed and the detected parameter in step is related to cyclic performance.

According to another aspect real time trend analysis may be performed by comparing load volume and/or time between columns present in the continuous chromatography, when the detected parameter is load volume and/or load time of sample for each column to a predetermined capacity.

In step 83, actions to eliminate or reduce the effect of the identified deviating behaviour are initiated whereby the performance of the continuous chromatography is maintained.

According to one aspect of the invention, the continuous chromatography comprises at least four columns and when the operational status of a particular column indicates that action is needed to maintain performance of the continuous chromatography, additional step 84 is performed in which the particular column is removed from the columns used by the continuous chromatography for continuous purification, and step 85 is performed in which actions to reinstate the operating status of the particular column is performed.

The action performed in step 85 may comprise running a conditioning process of the particular column, when the operational status indicates that the operational status of the particular column can be reinstated in-place as indicated by 86. Furthermore, the action performed in step 85 may alternatively comprise removing the particular column from the continuous chromatography and replacing it with a new column as indicated by 87 when the operational status indicates that the particular column has to be replaced.

The method described in connection with figure 8 may be implemented in a continuous chromatography configured to operate with at least three columns adapted for cyclic use for continuous purification of a target product when feeding the continuous chromatography with a sample containing the target product as disclosed in connection with figure 2.

The continuous chromatography comprises sensors configured to detect at least one parameter indicative of a selected function in the continuous chromatography, processing circuitry configured to perform real time trend analysis of the detected at least one parameter to identify a deviating behaviour of the selected function, and to initiate actions to eliminate or reduce the effect of the identified deviating behaviour, whereby operational status is monitored and the performance of the continuous chromatography is maintained.

According to one aspect, the processing circuitry has access to historic data of the at least one detected parameter stored in a database, and the trend analysis is then further based on the historic data, as described in connection with figures 7a and 7b.

According to another aspect, at least part of the processing circuitry and/or historic data is realised in a cloud implementation.

The method described above may be implemented in a computer program for monitoring operational status in a continuous chromatography. The computer program comprises instructions which, when executed on at least one processor, cause the at least one processor to carry out the method according to the different variations described in connection with figure 8. The computer program for monitoring operational status in a continuous chromatography may be stored on and carried by a computer-readable storage medium.

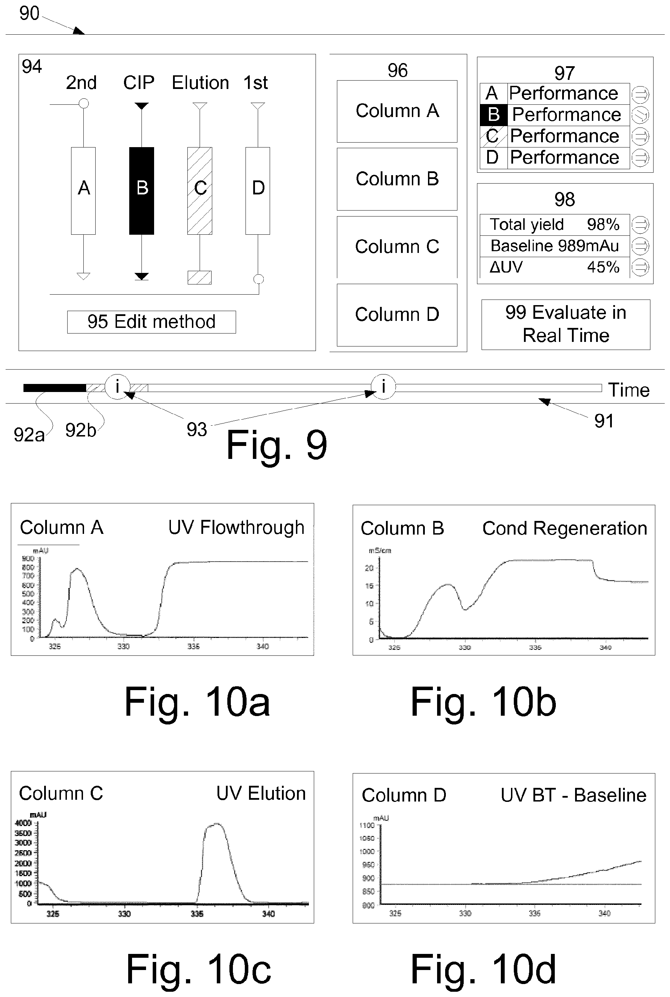

Figure 9 illustrates a graphical interface 90 for a continuous chromatography at a first occasion. The graphical interface is divided into several areas having different purposes. In the lower part of the graphical interface, a time line 91 is used to illustrate the projected run time, the executed run time 92a of the process, and the planned process 92b. Information pointers are illustrated to highlight certain events 93 that needs to be handled during the projected run time, such as scheduled maintenance, to prevent unscheduled downtime of the production.

The main area comprises an overview 94 of the chromatography process illustrating the process of each column A-D of the continuous chromatography. At the first occasion, column D (denoted 1st) is fed with sample from the cell culture process and the outlet of column D is connected with the inlet of column A (denoted 2nd). This means that column D and A are in the loading phase. The loaded column C (denoted Elution) is eluted and the outlet of column C is treated in subsequent steps in the bioprocess purification system. Column B (denoted CIP) was previously eluted and is cleaned to be able to be loaded with sample in a the future. The overview also include a possibility to adjust the purification method manually as indicated by 95. However, the planned process 92b is preferably not altered since this may influence the uptime of the system.

The main screen also comprises an area 96 illustrating operational status of the columns A-D, which are described in more detail in connection with figures 10a-10d. Performance of each column A-D is shown in 97, indicating where in the process each column is and also a real time trend indication. in this case, the performance of column B is highlighted and action is needed to ensure proper functionality. This may be planned and is the reason for the maintenance scheduled in the near future, as indicated by the first information pointer 93.

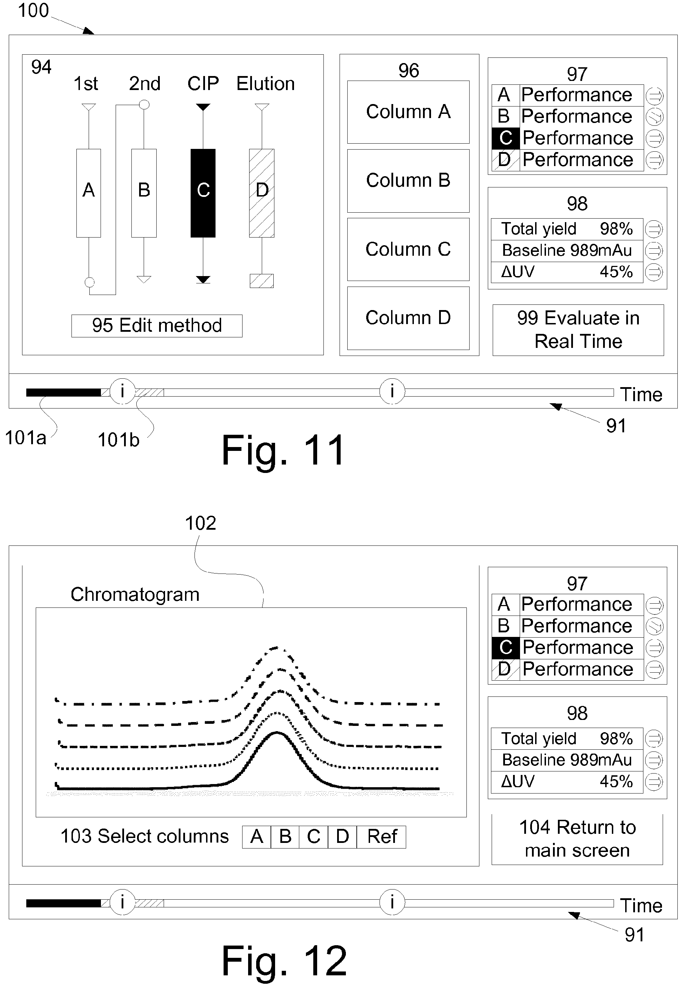

Certain key data, which are important for the process are presented in a separate area 98. Examples of key data is Total yield, Baseline, ΔUV. In order to be able to monitor and evaluate in real time, a button 99 is provided to switch between trend curves and the main screen. An example of an evaluation interface is shown in connection with figure 12.

Figures 10a-10d illustrate graphs for monitoring operational status of columns A-D in a continuous chromatography. Figure 10a illustrate the UV Flow through of column A, figure 10b illustrate the conductivity during regeneration for column B, figure 10c illustrate the UV Elution for column C and figure 10d illustrate the UV breakthrough - baseline for column D.

Fig. 11 illustrates a graphical interface 100 for a continuous chromatography at a second occasion. The graphical interface 100 is divided into the same areas as described in figure 9. However, the time line 91 is adjusted to compensate for the time elapsed between the first occasion and the second occasion. The is used to illustrate the projected run time, the executed run time 101a has been adjusted as well as the planned process 101b.

The overview 94 of the chromatography process illustrating the process of each column A-D of the continuous chromatography is updated. At the second occasion, column A (denoted 1st) is fed with sample from the cell culture process and the outlet of column A is connected with the inlet of column B (denoted 2nd). This means that column A and B are in the loading phase. The loaded column D (denoted Elution) is eluted and the outlet of column D is treated in subsequent steps in the bioprocess purification system. Column C (denoted CIP) was previously eluted and is cleaned to be able to be loaded with sample in a the future.

Figure 12 illustrates a real time evaluation interface, which is activated when an operator press the evaluation button 99, as described in connection with figure 9. The most important areas are still available in the evaluation interface, i.e. time line 91, performance 97 and key data 98. The major area of the evaluation interface shows a chromatogram 102 illustrating comparisons between selected parameters detected by sensors in the continuous chromatography. Different columns may be selected, as indicated by 103.

To return to the main screen a button 104 is provided for the user.

**Claims**

1. A method for monitoring operational status in a continuous chromatography system (20) configured to operate with at least three chromatography columns (A;B;C;N) and configured for continuous purification in a cyclic operation, wherein the continuous purification is performed on a sample comprising a target product, wherein the method comprises:

   a) detecting (81) at least one parameter indicative of the operational column binding capacity of each column (A;B;C;N) in the continuous chromatography system (20), wherein said parameter is load volume and/or load time of sample for each column (A;B;C;N) to reach a predetermined binding capacity,
   b) performing (82) real time trend analysis, over time, of each of the at least one detected parameter to identify a deviating behaviour of the operational column binding capacity of each column (A;B;C;N) based on a relative comparison between columns (A;B;C;N) and/or an absolute comparison between cycles for each column (A;B;C;N) , and
   c) initiating (83) actions to eliminate or reduce the effect of the identified deviating behaviour,

   whereby the performance of the continuous chromatography is maintained.

2. The method according to claim 1, wherein multiple cycles for each of the at least three columns (A;B;C;N) are performed and the detected parameter in step a) is related to cyclic performance, and the trend analysis in step b) is performed based on cycle number.

3. The method according to claim 2 , wherein the continuous chromatography system (20) comprises at least four columns (A;B;C;N) and when an operational status of a particular column (A;B;C;N) indicates that action is needed to maintain the performance of the continuous chromatography system (20), wherein step c) further comprises:

   c1) removing (84) the particular column (A;B;C;N) from the columns (A;B;C;N) used by the continuous chromatography system (20) for continuous purification, and
   c2) performing (85) actions to reinstate the operating status of the particular column (A;B;C;N).

4. The method according to claim 3, wherein the operational status indicates that the operational status of the particular column (A;B;C;N) can be reinstated in-place, and the action performed in step c2) comprises running (86) a conditioning process of the particular column (A;B;C;N).

5. The method according to claim 3, wherein the operational status indicates that the particular column (A;B;C;N) has to be replaced, and the action performed in step c2) comprises removing the particular column (A;B;C;N) from the continuous chromatography system (20) and replacing (87) it with a new column (A;B;C;N).

6. A continuous chromatography system (20) configured to operate with at least three chromatography columns (A;B;C;N) and configured for continuous purification in a cyclic operation, wherein the continuous purification is performed on a sample comprising a target product, wherein the continuous chromatography system (20) comprises:

   - sensors configured to detect at least one parameter indicative of the operational column binding capacity of each column (A;B;C;N) in the continuous chromatography system (20), wherein said parameter is load volume and/or load time of sample for each column to reach a predetermined binding capacity,

- processing circuitry configured to perform real time trend analysis of each of the at least one detected parameter to identify a deviating behaviour of the operational column binding capacity of each column (A;B;C;N) based on a relative comparison between columns (A;B;C;N) and/or an absolute comparison between cycles for each column (A;B;C;N), and to initiate actions to eliminate or reduce the effect of the identified deviating behaviour,

whereby an operational status is monitored and the performance of the continuous chromatography system (20) is maintained.

7. The continuous chromatography system (20) according to claim 6, wherein the processing circuitry has access to historic data of the at least one detected parameter stored in a database, and the trend analysis is further based on the historic data.

8. The continuous chromatography system (20) according to claim 7, wherein at least part of the processing circuitry and/or historic data is realised in a cloud implementation.


## Patentansprüche

1. Verfahren zur Überwachung des Betriebszustandes in einem kontinuierlichen Chromatographiesystem (20), das so konfiguriert ist, dass es mit mindestens drei Chromatographiesäulen (A; B; C; N) arbeitet und für eine kontinuierliche Reinigung in einem zyklischen Betrieb konfiguriert ist, wobei die kontinuierliche Reinigung an einer Probe durchgeführt wird, die ein Zielprodukt umfasst, wobei das Verfahren Folgendes umfasst:

   a) Erfassen (81) mindestens eines Parameters, der die betriebliche Säulenbindungskapazität jeder Säule (A; B; C; N) in dem kontinuierlichen Chromatographiesystem (20) anzeigt, wobei der Parameter das Ladevolumen und/oder die Ladezeit der Probe für jede Säule (A; B; C; N) ist, um eine vorbestimmte Bindungskapazität zu erreichen,
   b) Durchführen (82) einer Echtzeit-Trendanalyse jedes der mindestens einen erfassten Parameter im Laufe der Zeit, um ein abweichendes Verhalten der betrieblichen Säulenbindungskapazität jeder Säule (A;B;C;N) auf der Grundlage eines relativen Vergleichs zwischen Säulen (A;B;C;N) und/oder eines absoluten Vergleichs zwischen Zyklen für jede Säule (A;B;C;N) zu identifizieren, und
   c) Initiieren von (83) Maßnahmen zur Beseitigung oder Verringerung der Auswirkungen des festgestellten abweichenden Verhaltens,

   wobei die Leistung der kontinuierlichen Chromatographie aufrechterhalten wird.

2. Verfahren nach Anspruch 1, wobei mehrere Zyklen für jede der mindestens drei Säulen (A; B; C; N) durchgeführt werden und der erfasste Parameter in Schritt a) mit der zyklischen Leistung in Beziehung steht und die Trendanalyse in Schritt b) auf der Grundlage der Zykluszahl durchgeführt wird.

3. Verfahren nach Anspruch 2, wobei das kontinuierliche Chromatographiesystem (20) mindestens vier Säulen (A; B; C; N) umfasst, und wenn ein Betriebsstatus einer bestimmten Säule (A; B; C; N) anzeigt, dass Maßnahmen erforderlich sind, um die Leistung des kontinuierlichen Chromatographiesystems (20) aufrechtzuerhalten, wobei Schritt c) weiter Folgendes umfasst:

   c1) Entfernen (84) der bestimmten Säule (A;B;C;N) aus den Säulen (A;B;C;N), die von dem kontinuierlichen Chromatographiesystem (20) zur kontinuierlichen Reinigung verwendet werden, und
   c2) Durchführen von (85) Maßnahmen, um den Betriebszustand der jeweiligen Säule (A;B;C;N) wiederherzustellen.

4. Verfahren nach Anspruch 3, wobei der Betriebszustand anzeigt, dass der Betriebszustand der bestimmten Säule (A;B;C;N) an Ort und Stelle wiederhergestellt werden kann, und die in Schritt c2) durchgeführte Aktion das Durchführen (86) eines Konditionierungsprozesses der bestimmten Säule (A;B;C;N) umfasst.

5. Verfahren nach Anspruch 3, wobei der Betriebszustand anzeigt, dass die bestimmte Säule (A;B;C;N) ersetzt werden muss, und die in Schritt c2) durchgeführte Aktion das Entfernen der bestimmten Säule (A;B;C;N) aus dem kontinuierlichen Chromatographiesystem (20) und das Ersetzen (87) derselben durch eine neue Säule (A;B;C;N) umfasst.

6. Kontinuierliches Chromatographiesystem (20), das so konfiguriert ist, dass es mit mindestens drei Chromatographiesäulen (A; B; C; N) arbeitet und für eine kontinuierliche Reinigung in einem zyklischen Betrieb konfiguriert ist, wobei die kontinuierliche Reinigung an einer Probe durchgeführt wird, die ein Zielprodukt umfasst, wobei das kontinuierliche Chromatographiesystem (20) Folgendes umfasst:

- Sensoren, die so konfiguriert sind, dass sie mindestens einen Parameter erfassen, der die betriebliche Säulenbindungskapazität jeder Säule (A; B; C; N) in dem kontinuierlichen Chromatographiesystem (20) anzeigt, wobei der Parameter das Ladevolumen und/oder die Ladezeit der Probe für jede Säule ist, um eine vorbestimmte Bindungskapazität zu erreichen,
- eine Verarbeitungsschaltung, die so konfiguriert ist, dass sie eine Echtzeit-Trendanalyse jedes der mindestens einen erfassten Parameter durchführt, um ein abweichendes Verhalten der betrieblichen Säulenbindungskapazität jeder Säule (A; B; C; N) auf der Grundlage eines relativen Vergleichs zwischen Säulen (A; B; C; N) und/oder eines absoluten Vergleichs zwischen Zyklen für jede Säule (A; B; C; N) zu identifizieren und Maßnahmen zu initiieren, um die Wirkung des identifizierten abweichenden Verhaltens zu beseitigen oder zu verringern,

wodurch ein Betriebszustand überwacht und die Leistung des kontinuierlichen Chromatographiesystems (20) aufrechterhalten wird.

7. Kontinuierliches Chromatographiesystem (20) nach Anspruch 6, wobei die Verarbeitungsschaltung Zugang zu historischen Daten des mindestens einen erfassten Parameters aufweist, die in einer Datenbank gespeichert sind, und die Trendanalyse weiter auf den historischen Daten basiert.

8. Kontinuierliches Chromatographiesystem (20) nach Anspruch 7, wobei mindestens ein Teil der Verarbeitungsschaltungen und/oder der historischen Daten in einer Cloud-Implementierung realisiert wird.

**Revendications**

1. Procédé de surveillance d'état de fonctionnement dans un système de chromatographie continue (20) configuré pour fonctionner avec au moins trois colonnes de chromatographie (A ; B ; C ; N) et configuré pour une purification continue dans un fonctionnement cyclique, dans lequel la purification continue est réalisée sur un échantillon comprenant un produit cible, dans lequel le procédé comprend :

a) la détection (81) d'au moins un paramètre indiquant la capacité opérationnelle de liaison de colonne de chaque colonne (A ; B ; C ; N) dans le système de chromatographie continue (20), dans lequel ledit paramètre est un volume de charge et/ou un temps de charge d'échantillon pour chaque colonne (A ; B ; C ; N) afin d'atteindre une capacité de liaison prédéterminée,
b) la réalisation (82) d'une analyse des tendances en temps réel, au fil du temps, de chacun dudit au moins un paramètre détecté afin d'identifier un comportement déviant de la capacité opérationnelle de liaison de colonne de chaque colonne (A ; B ; C ; N) sur la base d'une comparaison relative entre colonnes (A ; B ; C ; N) et/ou d'une comparaison absolue entre cycles pour chaque colonne (A ; B ; C ; N), et
c) le lancement (83) d'actions visant à éliminer ou à réduire l'effet du comportement déviant identifié,

ce par quoi la performance de la chromatographie continue est maintenue.

2. Procédé selon la revendication 1, dans lequel plusieurs cycles pour chacune des au moins trois colonnes (A ; B ; C ; N) sont réalisés et le paramètre détecté à l'étape a) est lié à une performance cyclique, et l'analyse des tendances à l'étape b) est réalisée sur la base d'un nombre de cycles.

3. Procédé selon la revendication 2, dans lequel le système de chromatographie continue (20) comprend au moins quatre colonnes (A ; B ; C ; N) et lorsqu'un état de fonctionnement d'une colonne (A ; B ; C ; N) particulière indique qu'une action est nécessaire pour maintenir la performance du système de chromatographie continue (20), dans lequel l'étape c) comprend en outre :

c1) le retrait (84) de la colonne (A ; B ; C ; N) particulière des colonnes (A ; B ; C ; N) utilisées par le système de chromatographie continue (20) pour la purification continue, et
c2) la réalisation (85) d'actions pour rétablir l'état de fonctionnement de la colonne (A ; B ; C ; N) particulière.

**4.** Procédé selon la revendication 3, dans lequel l'état de fonctionnement indique que l'état de fonctionnement de la colonne (A ; B ; C ; N) particulière peut être rétabli sur place, et l'action réalisée à l'étape c2) comprend l'exécution (86) d'un processus de conditionnement de la colonne (A ; B ; C ; N) particulière.

**5.** Procédé selon la revendication 3, dans lequel l'état de fonctionnement indique que la colonne (A ; B ; C ; N) particulière doit être remplacée, et l'action réalisée à l'étape c2) comprend le retrait de la colonne (A ; B ; C ; N) particulière du système de chromatographie continue (20) et son remplacement (87) par une nouvelle colonne (A ; B ; C ;N).

**6.** Système de chromatographie continue (20) configuré pour fonctionner avec au moins trois colonnes de chromatographie (A ; B ; C ; N) et configuré pour une purification continue dans un fonctionnement cyclique, dans lequel la purification continue est réalisée sur un échantillon comprenant un produit cible, dans lequel le système de chromatographie continue (20) comprend :

- des capteurs, configurés pour détecter au moins un paramètre indiquant la capacité opérationnelle de liaison de colonne de chaque colonne (A ; B ; C ; N) dans le système de chromatographie continue (20), dans lequel ledit paramètre est un volume de charge et/ou un temps de charge d'échantillon pour chaque colonne afin d'atteindre une capacité de liaison prédéterminée,
- un circuit de traitement, configuré pour réaliser une analyse des tendances en temps réel de chacun dudit au moins un paramètre détecté afin d'identifier un comportement déviant de la capacité opérationnelle de liaison de colonne de chaque colonne (A ; B ; C ; N) sur la base d'une comparaison relative entre colonnes (A ; B ; C ; N) et/ou d'une comparaison absolue entre cycles pour chaque colonne (A ; B ; C ; N), et pour lancer des actions visant à éliminer ou à réduire l'effet du comportement déviant identifié,

ce par quoi un état de fonctionnement est surveillé et la performance du système de chromatographie continue (20) est maintenue.

**7.** Système de chromatographie continue (20) selon la revendication 6, dans lequel le circuit de traitement a accès à des données historiques du au moins un paramètre détecté stockées dans une base de données, et l'analyse des tendances est en outre basée sur les données historiques.

**8.** Système de chromatographie continue (20) selon la revendication 7, dans lequel au moins une partie du circuit de traitement et/ou des données historiques est réalisée dans une mise en œuvre en nuage.

17 Automation layer

| 11 Cell culture | 12 Hold | 13 Capture | 14 Viral inactiv. | 15 Polish | 16 Delivery |

# Fig. 1

20

$23_A$     $23_B$     $23_N$

A     B     N

$24_A$     $24_B$     $24_N$

$28'_A$   $28_A$   $28'_B$   $28_B$    $28'_N$   $28_N$   22

21    26     25 Valve system

21'

Buffers

29

27

Waste

# Fig. 2

Step 1

A    B    C

# Fig. 3a

Step 2

A    B    C

# Fig. 3b

Step 3

A    B    C

# Fig. 3c

Fig. 4a

Fig. 4b

Fig. 4c

Fig. 4d

Fig. 5

Fig. 6

Fig. 7a

Fig. 7b

Fig. 8

90

94

2nd    CIP    Elution   1st

A    B    C    D

95 Edit method

96

Column A

Column B

Column C

Column D

97

| A | Performance |
|---|---|
| B | Performance |
| C | Performance |
| D | Performance |

98

| Total yield | 98% |
|---|---|
| Baseline 989mAu | |
| ΔUV | 45% |

99 Evaluate in
Real Time

Time

92a    92b    93    91

# Fig. 9

Column A          UV Flowthrough

mAU
900
800
700
600
500
400
300
200
100
0
    325    330    335    340

# Fig. 10a

Column B          Cond Regeneration

mS/cm
20
15
10
5
0
    325    330    335    340

# Fig. 10b

Column C          UV Elution

mAU
4000
3500
3000
2500
2000
1500
1000
500
0
    325    330    335    340

# Fig. 10c

Column D          UV BT - Baseline

mAU
1100
1050
1000
950
900
850
800
    325    330    335    340

# Fig. 10d

100

94

| 1st | 2nd | CIP | Elution |

A    B    C    D

95 Edit method

96

Column A

Column B

Column C

Column D

97

| A | Performance |
| B | Performance |
| C | Performance |
| D | Performance |

98

| Total yield | 98% |
| Baseline | 989mAu |
| ΔUV | 45% |

99 Evaluate in Real Time

101a    101b    Time    91

# Fig. 11

102

Chromatogram

103 Select columns | A | B | C | D | Ref |

97

| A | Performance |
| B | Performance |
| C | Performance |
| D | Performance |

98

| Total yield | 98% |
| Baseline | 989mAu |
| ΔUV | 45% |

104 Return to main screen

Time    91

# Fig. 12

19

**EP 3 563 150 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010151214 A1